# FASCICULE DE BREVET EUROPEEN

(11) **EP 2 988 981 B1**
(45) Date de publication et mention de la délivrance du brevet: **05.06.2019**
(21) Numéro de dépôt: 14722273.1
(22) Date de dépôt: 14.04.2014
(51) Int. Cl.: B60W 50/14, B60W 30/16

(54) **PROCÉDÉ DE FOURNITURE AUTOMATIQUE D'INFORMATIONS DE SUPERVISION D'UN VÉHICULE À L'ÉQUIPEMENT DE COMMUNICATION DU CONDUCTEUR**
VERFAHREN ZUM AUTOMATISCHEN LEITEN VON FAHRZEUGÜBERWACHUNGSINFORMATIONEN AN DAS TELEFON DES FAHRERS
METHOD FOR AUTOMATICALLY SUPPLYING VEHICLE MONITORING INFORMATIONS TO THE DRIVER'S TELEPHONE

(30) Priorité: 26.04.2013 FR 1353836
(43) Date de publication de la demande: 02.03.2016
(73) Titulaire: PSA Automobiles SA, 78300 Poissy (FR)
(72) Inventeur: TACCORI DUVERGEY, Celine, F-92120 Montrouge (FR)
(74) Mandataire: Jeannin, Laurent Jean-Pierre
(86) Numéro de dépôt international: PCT/FR2014/050906
(87) Numéro de publication internationale: WO 2014/174183

(56) Documents cités:
- EP-A1- 1 772 338
- CN-A- 102 442 314
- DE-A1-102009 056 014
- DE-A1-102011 111 820
- US-A1- 2006 155 431
- US-A1- 2008 133 084
- US-B1- 6 226 570

## Description

L'invention concerne les véhicules, éventuellement de type automobile, et pouvant fonctionner dans un mode de conduite automatisée.

On entend ici par « mode de conduite automatisée » un mode dans lequel la conduite du véhicule est assurée de façon automatisée par une application embarquée, à partir d'informations relatives à l'environnement du véhicule et à des paramètres de fonctionnement de ce dernier, sans que le conducteur n'agisse sur le volant ou sur les pédales d'accélérateur et pédale de frein. On notera qu'actuellement les règles de sécurité routière en vigueur imposent que le conducteur soit maître de son véhicule, et donc le conducteur doit à chaque instant superviser la conduite de son véhicule afin de pouvoir reprendre n'importe quand le contrôle de sa conduite. Par conséquent, ces règles interdisent que le conducteur fasse pivoter son siège, même partiellement, pour discuter, travailler, jouer ou regarder un film avec d'autres passagers.

Afin de permettre au conducteur de superviser la conduite de son véhicule, ce dernier comprend des moyens de traitement, définissant une application de supervision embarquée, et chargés de contrôler l'affichage d'informations de supervision sur au moins un écran du véhicule, faisant par exemple partie du combiné du tableau de bord ou du combiné central de la planche de bord (voir US6226570B).

Ces informations de supervision peuvent, par exemple, comprendre des images 2D ou 3D du véhicule dans son environnement (marquages au sol, panneaux, véhicules, piétons, animaux, obstacles) détecté à partir de données acquises par des moyens d'acquisition (radar(s), caméra(s)) embarqués dans le véhicule.

Lorsque le conducteur observe l'écran sur lequel sont affichées les informations de supervision, il ne peut pas faire autre chose. Par conséquent, il ne peut pas utiliser en même temps un équipement de communication portable, comme par exemple un téléphone mobile, une tablette électronique, ou une console de jeu communicante. Cette situation peut mécontenter certains conducteurs qui ont des difficultés à se passer de leur équipement de communication portable.

De plus, aujourd'hui, certains conducteurs utilisent déjà leurs équipements de communication en conduisant (voir DE102011111820A), et donc s'ils ne conduisaient plus ils les utiliseraient encore plus, et bon nombre de ceux qui ne les utilisaient pas encore le feraient.

L'invention a donc pour but d'améliorer la situation, et plus précisément de permettre à un conducteur de superviser la conduite de son véhicule en même temps qu'il utilise son équipement de communication portable.

Elle propose notamment à cet effet le procédé défini par la revendication 1. Ce procédé comprend une étape dans laquelle on établit automatiquement une communication entre le véhicule et l'équipement lorsque ce dernier est utilisé et que le véhicule est dans le mode de conduite automatisée, puis on transmet à l'équipement une partie au moins d'informations de supervision qui sont affichées sur le premier écran, afin qu'elle soit affichée sensiblement simultanément sur une partie choisie du second écran.

Des informations de supervision étant désormais affichées sur le second écran de l'équipement de communication portable, le conducteur peut donc superviser la conduite de son véhicule en même temps qu'il utilise cet équipement de communication portable.

Le procédé selon l'invention peut comporter d'autres caractéristiques qui peuvent être prises séparément ou en combinaison, et notamment :
- pendant l'étape on peut transmettre toutes les informations de supervision affichées sur le premier écran consécutivement à une détection de l'utilisation de l'équipement, afin qu'elles soient toutes affichées sensiblement simultanément sur une partie choisie du second écran. En variante, pendant l'étape on peut transmettre des informations de supervision affichées sur le premier écran et représentatives d'un avertissement, consécutivement à une détection de l'utilisation de l'équipement, afin que seules ces informations de supervision d'avertissement soient affichées sensiblement simultanément sur une partie choisie du second écran ;
- pendant l'étape on peut détecter le lieu où est installé le conducteur, puis on peut ne transmettre des informations de supervision à l'équipement qu'à condition que ce lieu détecté soit le siège qui est dédié à la conduite du véhicule, et on peut rendre impossible toute tentative de suppression par le conducteur de l'affichage des informations de supervision transmises. En variante, pendant l'étape on peut détecter le lieu où est placé l'équipement, puis on peut ne transmettre des informations de supervision à l'équipement qu'à condition que ce lieu détecté soit un espace dédié à la conduite du véhicule, et on peut rendre impossible toute tentative de suppression par le conducteur de l'affichage des informations de supervision transmises ;
- on peut enregistrer l'équipement auprès d'une application embarquée du véhicule, de sorte qu'il soit considéré comme appartenant au conducteur ;
- pendant l'étape on peut détecter l'utilisation de l'équipement par échange de messages entre ce dernier et le véhicule ;
- lorsque le mode de conduite automatisée concerne une situation temporaire qui vient de se terminer, on peut transmettre à l'équipement un message d'alerte signalant la fin de cette situation temporaire et requérant la reprise immédiate de la conduite du véhicule par le conducteur.

L'invention propose également un véhicule, éventuellement de type automobile, tel que défini par la revendication 9.

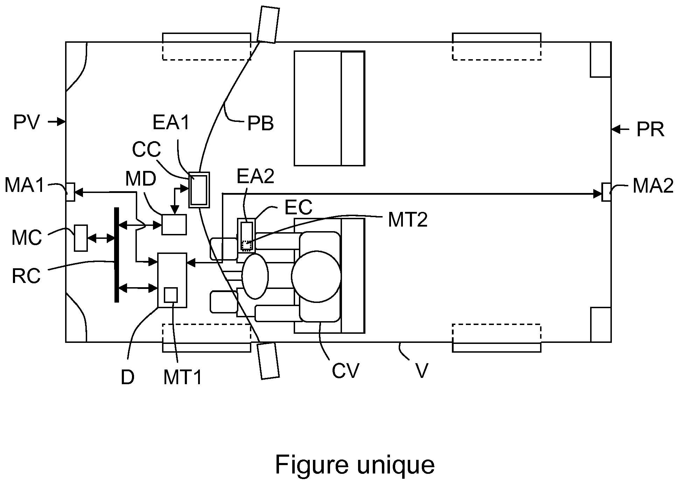

D'autres caractéristiques et avantages de l'invention apparaîtront à l'examen de la description détaillée ci-après, et du dessin annexé, sur lequel l'unique figure illustre schématiquement et fonctionnellement, dans une vue du dessus, un exemple de véhicule automobile dans lequel se trouve installé un conducteur avec un équipement de communication portable selon l'invention.

L'invention a notamment pour but de proposer un procédé destiné à fournir des informations de supervision, relatives à la supervision d'un véhicule V propre à fonctionner dans un mode de conduite automatisée.

Dans ce qui suit, on considère, à titre d'exemple non limitatif, que le véhicule V est de type automobile. Il s'agit par exemple d'une voiture, d'un car (ou bus), d'un camion ou d'un véhicule utilitaire. Mais l'invention n'est pas limitée à ce type de véhicule. Elle concerne en effet tout type de véhicule terrestre pouvant effectuer des déplacements et des manoeuvres sur le sol au moyen de roues, et comprenant un dispositif de supervision D permettant de le faire fonctionner dans un mode de conduite automatisée (sans intervention de son conducteur CV).

On a schématiquement et fonctionnellement représenté sur l'unique figure un véhicule automobile de type voiture V, équipé d'un exemple de dispositif de supervision D.

Cette voiture V comprend classiquement une partie avant PV, une partie arrière PR opposée à la partie avant PV, et une planche de bord PB, ici équipée d'un combiné central CC comprenant un premier écran EA1. Comme illustré sur l'unique figure, le véhicule V peut également comprendre un réseau de communication (ou réseau de bord) RC, éventuellement de type multiplexé, et permettant l'échange d'informations entre des équipements embarqués (et notamment le combiné central CC et le dispositif de supervision D). Ces informations peuvent être, par exemple, des commandes (ou instructions), des fichiers de données, des valeurs de paramètres ou d'états mesurées ou estimées et des résultats de calculs. Egalement comme illustré sur l'unique figure, le véhicule V peut éventuellement comprendre un module (ou boîtier) télématique MD principalement chargé de contrôler l'affichage sur le premier écran EA1 d'informations et d'images, relatives au fonctionnement du véhicule V ou à des résultats délivrés par des applications embarquées et notamment, ici, des informations de supervision délivrées par le dispositif de supervision D. On notera que ce module (ou boîtier) télématique MD pourrait éventuellement faire partie d'un ordinateur de bord (non représenté), ou bien du combiné central CC.

Comme évoqué ci-avant, le dispositif de supervision D comprend des premiers moyens de traitement MT1 qui définissent une application de supervision embarquée et sont chargés de contrôler l'affichage d'informations de supervision sur au moins un écran du véhicule V (ici le premier écran EA1 (mais cela pourrait en être un autre comme par exemple celui d'un combiné du tableau de bord). Le premier écran EA1 constitue alors une espèce d'interface homme/machine (ou IHM) de supervision.

Ces informations de supervision peuvent, par exemple, comprendre des images 2D ou 3D du véhicule V dans son environnement (marquages au sol, panneaux, véhicules, piétons, animaux, obstacles) qui a été détecté à partir de données acquises par des moyens d'acquisition MAi embarqués dans le véhicule V. On notera que les informations de supervision peuvent également comporter des messages d'avertissement ou des messages d'alerte (ou d'alarme).

Les moyens d'acquisition MAi sont installés en des endroits choisis du véhicule V qui leur permettent d'observer une partie au moins de son environnement, et en particulier au moins une zone d'acquisition qui est située devant son pare-choc ou bouclier avant ou derrière son pare-choc ou bouclier arrière, et agencés de manière à acquérir et transmettre des données relatives à chaque zone d'acquisition. Ces moyens d'acquisition MAi peuvent comprendre au moins une caméra d'observation et/ou des analyseurs par voie d'ondes. Chaque caméra (d'observation) peut être de type grand angle et chargée de fournir des images réelles. Les analyseurs par voie d'ondes comprennent par exemple des détecteurs radar ou ultrasoniques, implantés à l'avant et/ou à l'arrière du véhicule V (par exemple dans les pare-chocs ou boucliers) dans des positions qui leur permettent de détecter des obstacles dans leur environnement immédiat.

Dans l'exemple non limitatif illustré sur l'unique figure, le véhicule V comprend des moyens d'acquisition MA1 (i = 1) implantés à l'avant du véhicule V (ici dans le pare-choc ou bouclier avant), et des moyens d'acquisition MA2 (i = 2) implantés à l'arrière du véhicule V (ici dans le pare-choc ou bouclier arrière). Cela permet au dispositif de supervision D de générer à destination du conducteur CV des informations de supervision, définissant notamment des images 2D ou 3D représentatives du positionnement du véhicule V par rapport à son environnement et destinées à être affichées (ici) sur le premier écran EA1.

Afin de permettre au conducteur CV de superviser la conduite de son véhicule V en même temps qu'il utilise son équipement de communication portable EC, l'invention propose notamment un procédé de supervision.

Dans ce qui suit, on considère, à titre d'exemple non limitatif, que l'équipement de communication portable EC est un téléphone intelligent (ou « smartphone »). Mais il pourrait également s'agir d'une tablette électronique ou d'une console de jeu communicante, et plus généralement de tout type d'équipement électronique disposant d'un écran d'affichage et capable d'échanger des données par voie d'ondes avec un autre équipement communiquant.

On considère ici que le véhicule V est pourvu d'un module de communication MC qui est capable d'établir des communications sans fil avec le téléphone (intelligent) EC du conducteur CV. Ces communications peuvent être de type Bluetooth ou Wi-Fi, par exemple, ou bien de type NFC (« Near Field Communication » - communication en champ proche).

Le procédé de supervision, selon l'invention, comprend une étape dans laquelle on établit automatiquement une communication entre le véhicule V et le téléphone EC lorsque ce dernier (EC) est utilisé et que le véhicule V est dans son mode de conduite automatisée, puis on transmet au téléphone EC une partie au moins d'informations de supervision qui sont affichées sur le premier écran EA1 (ici du combiné central CC), afin que cette partie soit affichée sensiblement simultanément sur une partie choisie du second écran EA2 du téléphone EC.

Le second écran EA2 constitue alors une espèce d'interface homme/machine (ou IHM) de supervision au moins partiellement redondante par rapport à celle définie par le premier écran EA1.

Par exemple, cette partie choisie peut être une partie supérieure du second écran EA2, occupant, par exemple, un tiers ou une moitié de la surface d'affichage de ce dernier (EA2). Dans une variante, il pourrait s'agir d'une partie inférieure du second écran EA2, occupant, par exemple, un tiers ou une moitié de la surface d'affichage de ce dernier (EA2). On notera que la surface de la partie choisie d'affichage doit être suffisamment grande pour que les informations de supervision qu'elle contient soit facilement lisibles et interprétables par le conducteur CV.

Grâce à l'invention, le conducteur CV dispose, sur le second écran EA2 de son téléphone EC, d'informations de supervision qu'il peut voir aisément, notamment grâce à sa vision périphérique, alors même qu'il lit d'autres informations ou regarde d'autres images affichées sur ce second écran EA2 et fournies par une autre application que celle de supervision. Cela s'avère particulièrement avantageux.

L'établissement automatique de la communication consiste ici à synchroniser le véhicule V et le téléphone EC.

L'affichage des informations de supervision se fait de préférence en parallèle d'un autre affichage, résultant de l'utilisation d'une application par le téléphone EC à la demande du conducteur CV, éventuellement du fait d'une réduction de la surface d'affichage habituellement dédiée à cet autre affichage. Mais cet affichage pourrait également se faire par-dessus une partie d'un autre affichage résultant de l'utilisation d'une application.

Tout type d'application peut être ici utilisé en même temps que des informations de supervision sont affichées. Ainsi, il pourra s'agir d'une application de livre électronique ou de messagerie électronique (e-mail, SMS, MMS), ou de navigation sur l'Internet, ou encore d'un jeu.

Le contrôle de l'établissement d'une communication entre le véhicule V et l'équipement EC, lorsque ce dernier (EC) est utilisé et que le véhicule V est dans son mode de conduite automatisée, peut être assuré par des moyens de traitement qui, comme illustré non limitativement sur l'unique figure, peuvent être les premiers moyens de traitement MT1 du dispositif de supervision D. Ces moyens de traitement (ici MT1) sont alors chargés, lorsque la double condition précitée est satisfaite, de déclencher la transmission au téléphone EC, par le module de communication MC, d'une partie au moins des informations de supervision qui sont affichées sur le premier écran EA1, afin qu'elle soit affichée sensiblement simultanément sur une partie choisie du second écran EA2.

Ces premiers moyens de traitement MT1 peuvent être réalisés sous la forme de modules logiciels (ou informatiques (ou « software »)), ou bien d'une combinaison de circuits électroniques (ou « hardware ») et de modules logiciels.

Par ailleurs, le contrôle de l'affichage des informations de supervision, transmises par le module de communication MC, sur le second écran EA2 est assuré par des seconds moyens de traitement MT2 qui sont implantés dans le téléphone EC. En fait, ces seconds moyens de traitement MT2 sont agencés pour récupérer une partie au moins des informations de supervision qui sont affichées sur le premier écran EA1 et pour déclencher l'affichage automatique de ces informations de supervision récupérées sur une partie choisie du second écran EA2 de leur téléphone EC.

Ces seconds moyens de traitement MT2 peuvent être réalisés sous la forme de modules logiciels (ou informatiques (ou « software »)) constituant une application logicielle (éventuellement téléchargeable via un réseau de communication), ou bien d'une combinaison de circuits électroniques (ou « hardware ») et de modules logiciels.

On notera que dans l'étape du procédé on peut, par exemple, détecter l'utilisation du téléphone EC par échange de messages entre ce dernier (EC) et le module de communication MC du véhicule V. En effet, lorsque le téléphone EC est utilisé, et donc actif (ou allumé), éventuellement pour une application, il est nécessairement capable de communiquer. Cette détection est ici importante car elle est destinée à imposer un affichage automatique d'informations de supervision sur le second écran EA2 du téléphone EC lorsque ce dernier (EC) est actif (ou allumé).

On notera également que dans l'étape du procédé on peut transmettre toutes les informations de supervision qui sont affichées sur le premier écran EA1 consécutivement à la détection de l'utilisation du téléphone EC, afin qu'elles soient toutes affichées sensiblement simultanément sur une partie choisie du second écran EA2. Dans ce cas, le conducteur CV dispose de l'intégralité des informations de supervision affichées sur le premier écran EA1 du véhicule V et donc peut réaliser une supervision totale sans quitter des yeux le second écran EA2.

Dans une variante de réalisation, pendant l'étape du procédé on peut ne transmettre au téléphone EC que des informations de supervision qui sont affichées sur le premier écran EA1 et qui sont représentatives d'un avertissement (ou d'une alerte), consécutivement à la détection de l'utilisation du téléphone EC, afin que seules ces informations de supervision d'avertissement soient affichées sensiblement simultanément sur une partie choisie du second écran EA2. Dans ce cas, le conducteur CV ne dispose que des informations de supervision qui sont les plus importantes et donc qui sont de nature à le pousser à agir ou à regarder le premier écran EA1 ou l'environnement du véhicule V. Ces informations de supervision d'avertissement peuvent être des messages textuels qui apparaissent éventuellement au sein d'une fenêtre intruse (ou « pop-up »).

On notera également que pendant l'étape du procédé on peut détecter un lieu où est installé le conducteur CV. Cette détection peut être assurée par tout moyen connu de l'homme de l'art, et notamment grâce à une caméra installée dans l'habitacle du véhicule V et chargée d'observer le visage du conducteur CV, ou bien grâce à un capteur de présence couplé au siège conducteur, ou encore grâce à un capteur de fermeture implanté dans la boucle (de verrouillage) de la ceinture de sécurité qui est couplée au siège conducteur. On ne transmet alors des informations de supervision au téléphone EC (à la requête des premiers moyens de traitement MT1) qu'à condition que le lieu détecté soit le siège conducteur, et on (les seconds moyens de traitement MT2) rend(ent) impossible toute tentative de suppression par le conducteur CV de l'affichage de ces informations de supervision transmises. En d'autres termes, on active automatiquement l'application de supervision dans le téléphone EC lorsque la double condition précitée est satisfaite, et on interdit sa désactivation par le conducteur CV.

Cette option est destinée à éviter que les informations de supervision soient transmises simultanément à tous les équipements de communication portables qui sont placés dans l'habitacle du véhicule V et qui appartiennent à des passagers (non conducteurs). Ainsi, les écrans des équipements de communication de ces passagers ne sont pas contraints d'afficher les informations de supervision qui ne les concernent pas.

Dans une variante de réalisation, pendant l'étape du procédé on peut détecter un lieu où est installé le téléphone EC. Cette détection peut être assurée par tout moyen connu de l'homme de l'art, et notamment grâce à une caméra installée dans l'habitacle du véhicule V, ou bien grâce à l'analyse de la puissance et/ou de la direction générale des ondes qui sont transmises par le téléphone EC au module de communication MC. On ne transmet alors des informations de supervision au téléphone EC (à la requête des premiers moyens de traitement MT1) qu'à condition que le lieu détecté soit un espace de l'habitacle dédié à la conduite du véhicule V, et on (les seconds moyens de traitement MT2) rend(ent) impossible toute tentative de suppression par le conducteur CV de l'affichage de ces informations de supervision transmises.

On notera également que l'on peut éventuellement envisager d'enregistrer le téléphone EC du conducteur CV auprès d'une application qui est embarquée dans le véhicule V (par exemple une sous-partie logicielle des premiers moyens de traitement MT1), afin qu'il soit considéré comme appartenant au conducteur CV. Cet enregistrement peut se faire par toute technique connue de l'homme de l'art, et notamment au moyen d'un récepteur de type NFC installé dans l'habitacle du véhicule V, par exemple dans la planche de bord PB, ou bien lors d'un premier appairage Bluethooth ou Wi-Fi suivi d'une sélection d'option d'enregistrement dans un menu affiché sur le premier écran EA1.

Cette dernière option peut éviter d'avoir à effectuer une détection du lieu d'installation du conducteur CV ou de son téléphone EC, étant donné qu'une fois le téléphone EC du conducteur CV enregistré, le module de communication MC ne transmet des informations de supervision qu'à ce téléphone EC.

On notera également que lorsque le mode de conduite automatisée concerne une situation temporaire qui vient de se terminer, on (le module de communication MC) peut transmettre au téléphone EC (à la demande des premiers moyens de traitement MT1) un message d'alerte signalant la fin de cette situation temporaire et requérant une reprise immédiate de la conduite du véhicule V par son conducteur CV. Par exemple, le mode de conduite automatisée peut avoir été activé consécutivement à la sélection par le conducteur CV d'une fonction d'aide à la conduite telle qu'une assistance pendant un embouteillage (ou « Trafic Jam Assist »). On comprendra en effet qu'à la fin de l'embouteillage il est préférable que le conducteur CV reprenne le contrôle de son véhicule V.

On notera également qu'il n'est pas obligatoire que l'application de supervision proposée par l'invention soit lancée automatiquement sur l'équipement de communication portable (notamment du conducteur) dès lors que le véhicule se trouve placé dans son mode de conduite automatisée. En effet, ce lancement pourrait être déclenché par sa sélection par le conducteur, via une interface homme/machine du véhicule ou de son propre équipement de communication portable.

## Revendications

1. Procédé de fourniture d'informations de supervision, relatives à la supervision d'un véhicule (V) propre à fonctionner dans un mode de conduite automatisée et disposant d'un premier écran (EA1) propre à afficher lesdites informations de supervision pour informer un conducteur disposant d'un équipement de communication portable (EC) propre à échanger des données par voie d'ondes avec ledit véhicule (V) et comportant un second écran (EA2) pour l'affichage, **caractérisé en ce qu'**il comprend une étape dans laquelle on établit automatiquement une communication entre ledit véhicule (V) et ledit équipement (EC) lorsque ce dernier (EC) est utilisé et que ledit véhicule (V) est dans ledit mode, puis on transmet audit équipement (EC) une partie au moins d'informations de supervision affichées sur ledit premier écran (EA1) afin qu'elle soit affichée sensiblement simultanément sur une partie choisie dudit second écran (EA2) et **en ce que** dans ladite étape on transmet des informations de supervision affichées sur ledit premier écran (EA1) consécutivement à une détection de l'utilisation dudit équipement (EC) afin qu'elles soient affichées sensiblement simultanément sur une partie choisie dudit second écran (EA2).

2. Procédé selon la revendication 1, **caractérisé en ce que** dans ladite étape on transmet toutes lesdites informations de supervision affichées sur ledit premier écran (EA1) consécutivement à une détection de l'utilisation dudit équipement (EC), afin qu'elles soient toutes affichées sensiblement simultanément sur une partie choisie dudit second écran (EA2).

3. Procédé selon la revendication 1, **caractérisé en ce que** dans ladite étape on transmet des informations de supervision affichées sur ledit premier écran (EA1) et représentatives d'un avertissement, consécutivement à une détection de l'utilisation dudit équipement (EC), afin que seules ces informations de supervision d'avertissement soient affichées sensiblement simultanément sur une partie choisie dudit second écran (EA2).

4. Procédé selon l'une des revendications 1 à 3, **caractérisé en ce que** dans ladite étape on détecte un lieu où est installé ledit conducteur, puis on ne transmet des informations de supervision audit équipement (EC) qu'à condition que ledit lieu détecté soit un siège dédié à la conduite dudit véhicule (V), et on rend impossible toute tentative de suppression par ledit conducteur de l'affichage desdites informations de supervision transmises.

5. Procédé selon l'une des revendications 1 à 3, **caractérisé en ce que** dans ladite étape on détecte un lieu où est placé ledit équipement (EC), puis on ne transmet des informations de supervision audit équipement (EC) qu'à condition que ledit lieu détecté soit un espace dédié à la conduite dudit véhicule (V), et on rend impossible toute tentative de suppression par ledit conducteur de l'affichage desdites informations de supervision transmises.

6. Procédé selon l'une des revendications 1 à 5, **caractérisé en ce que** l'on enregistre ledit équipement (EC) auprès d'une application embarquée dudit véhicule (V), de sorte qu'il soit considéré comme appartenant audit conducteur.

7. Procédé selon l'une des revendications 1 à 6, **caractérisé en ce que** dans ladite étape on détecte l'utilisation dudit équipement (EC) par échange de messages entre ce dernier (EC) et ledit véhicule (V).

8. Procédé selon l'une des revendications 1 à 7, **caractérisé en ce que**, lorsque ledit mode concerne une situation temporaire venant de se terminer, on transmet audit équipement (EC) un message d'alerte signalant la fin de cette situation temporaire et requérant une reprise immédiate de la conduite dudit véhicule (V) par ledit conducteur.

9. Véhicule (V) propre à fonctionner dans un mode de conduite automatisée et disposant d'un premier écran (EA1) propre à afficher des informations de supervision pour informer un conducteur disposant d'un équipement de communication portable (EC) propre à échanger des données par voie d'ondes avec ledit véhicule (V) et comportant un second écran (EA2) pour l'affichage, **caractérisé en ce qu'**il comprend des moyens de traitement (MT1) agencés pour contrôler l'établissement d'une communication entre ledit véhicule (V) et ledit équipement (EC) lorsque ce dernier (EC) est utilisé et que ledit véhicule (V) est dans ledit mode, puis pour déclencher une transmission audit équipement (EC) d'une partie au moins d'informations de supervision affichées sur ledit premier écran (EA1), afin qu'elle soit affichée sensiblement simultanément sur une partie choisie dudit second écran (EA2) des informations de supervision affichées sur ledit premier écran (EA1) étant transmismes consécutivement à une détection de l'utilisation dudit équipement (EC) afin qu'elles soient affichées sensiblement simultanément sur une partie choisie dudit second écran (EA2).

## Patentansprüche

1. Verfahren zum Liefern von Überwachungsinformationen in Zusammenhang mit der Überwachung eines Fahrzeugs (V), das geeignet ist, in einem automatisierten Fahrmodus zu funktionieren und über einen ersten Bildschirm (EA1) verfügt, der geeignet ist, um die Überwachungsinformationen anzuzeigen, um einen Fahrer, der über eine tragbare Kommunikationsausstattung (EC) verfügt, die geeignet ist, Daten über Wellen mit dem Fahrzeug (V) auszutauschen, zu informieren, und einen zweiten Bildschirm (EA2) zum Anzeigen umfasst, **dadurch gekennzeichnet, dass** es einen Schritt umfasst, bei dem automatisch eine Kommunikation zwischen dem Fahrzeug (V) und der Ausstattung (EC) hergestellt wird, wenn diese Letztere (EC) verwendet wird und das Fahrzeug (V) in dem Modus ist, dann an die Ausstattung (EC) mindestens ein Teil von Überwachungsinformationen übertragen wird, der auf dem ersten Bildschirm (EA1) angezeigt wird, damit sie im Wesentlichen gleichzeitig auf einem ausgewählten Teil des zweiten Bildschirms (EA2) angezeigt wird, und dass bei dem Schritt Überwachungsinformationen übertragen werden, die auf dem ersten Bildschirm (EA1) im Anschluss an ein Erfassen der Verwendung der Ausstattung (EC) angezeigt werden, damit sie im Wesentlichen gleichzeitig auf einem ausgewählten Teil des zweiten Bildschirms (EA2) angezeigt werden.

2. Verfahren nach Anspruch 1, **dadurch gekennzeichnet, dass** bei dem Schritt alle Überwachungsinformationen, die auf dem ersten Bildschirm (EA1) angezeigt sind, im Anschluss an ein Erfassen der Verwendung der Ausstattung (EC) übertragen werden, damit sie alle im Wesentlichen gleichzeitig auf einem ausgewählten Teil des zweiten Bildschirms (EA2) angezeigt werden.

3. Verfahren nach Anspruch 1, **dadurch gekennzeichnet, dass** bei dem Schritt Überwachungsinformationen, die auf dem ersten Bildschirm (EA1) angezeigt sind und für eine Warnung repräsentativ sind, im Anschluss an ein Erfassen der Verwendung der Ausstattung (EC) übertragen werden, damit allein diese Warnungsüberwachungsinformationen im Wesentlichen gleichzeitig auf einem ausgewählten Teil des zweiten Bildschirms (EA2) angezeigt werden.

4. Verfahren nach einem der Ansprüche 1 bis 3, **dadurch gekennzeichnet, dass** bei dem Schritt ein Ort erfasst wird, an dem der Fahrer installiert ist, dann Überwachungsinformationen an die Ausstattung (EC) nur unter der Bedingung übertragen werden, dass der erfasste Ort ein Sitz ist, der dem Lenken des Fahrzeugs (V) gewidmet ist, und jeder Versuch des Löschens durch den Fahrer der Anzeige der übertragenen Überwachungsinformationen unmöglich gemacht wird.

5. Verfahren nach einem der Ansprüche 1 bis 3, **dadurch gekennzeichnet, dass** bei dem Schritt, bei dem ein Ort, an dem die Ausstattung (EC) platziert ist, erfasst wird, dann Überwachungsinformationen an die Ausstattung (EC) nur unter der Bedingung übertragen werden, dass der erfasste Ort ein Raum ist, der dem Lenken des Fahrzeugs (V) gewidmet ist, und jeder Versuch des Löschens durch den Fahrer der Anzeige der übertragenen Überwachungsinformationen unmöglich gemacht wird.

6. Verfahren nach einem der Ansprüche 1 bis 5, **dadurch gekennzeichnet, dass** die Ausstattung (EC) bei einer Bordapplikation des Fahrzeugs (V) derart registriert wird, dass sie als dem Fahrer gehörend betrachtet wird.

7. Verfahren nach einem der Ansprüche 1 bis 6, **dadurch gekennzeichnet, dass** bei dem Schritt der Verwendung die Ausstattung (EC) durch Austausch von Meldungen zwischen dieser Letzteren (EC) und dem Fahrzeug (V) erfasst wird.

8. Verfahren nach einem der Ansprüche 1 bis 7, **dadurch gekennzeichnet, dass**, wenn der Modus eine vorübergehende Situation, die soeben endete, betrifft, der Ausstattung (EC) eine Warnmeldung übertragen wird, die das Ende dieser vorübergehenden Situation meldet und eine sofortige Wiederaufnahme des Lenkens des Fahrzeugs (V) durch den Fahrer fordert.

9. Fahrzeug (V), das geeignet ist, um in einem automatisierten Fahrmodus zu funktionieren und über einen ersten Bildschirm (EA1) verfügt, der geeignet ist, um Überwachungsinformationen anzuzeigen, um einen Fahrer, der über eine tragbare Kommunikationsausstattung (EC) verfügt, die geeignet ist, um Daten durch Wellen mit dem Fahrzeug (V) auszutauschen, zu informieren, und einen zweiten Bildschirm (EA2) zur Anzeige umfasst, **dadurch gekennzeichnet, dass** es Verarbeitungsmittel (MT1) umfasst, die eingerichtet sind, um das Herstellen einer Kommunikation zwischen dem Fahrzeug (V) und der Ausstattung (EC) zu prüfen, wenn diese Letztere (EC) verwendet wird, und dass das Fahrzeug (V) in diesem Modus ist, und dann eine Übertragung zu der Ausstattung (EC) mindestens eines Teils der Überwachungsinformationen, die auf dem ersten Bildschirm (EA1) angezeigt ist, auszulösen, damit sie im Wesentlichen gleichzeitig auf einem ausgewählten Teil des zweiten Bildschirms (EA2) angezeigt werden, wobei Überwachungsinformationen, die auf dem ersten Bildschirm (EA1) angezeigt werden, im Anschluss an ein Erfassen der Verwendung der Ausstattung (EC) übertragen werden, damit sie im Wesentlichen gleichzeitig auf einem ausgewählten Teil des zweiten Bildschirms (EA2) angezeigt werden.

## Claims

1. A method for providing monitoring data pertaining to the monitoring of a vehicle (V) suitable for operating in an automated driving mode and having a first screen (EA1) suitable for displaying said monitoring data in order to inform a driver who has a portable communication device (EC) suitable for exchanging data with said vehicle (V) via radio waves, and comprising a second display screen (EA2), **characterized in that** it includes a step in which a communication is automatically set up between said vehicle (V) and said device (EC) when the latter (EC) is used and said vehicle (V) is in said mode, then at least a part of the monitoring data displayed on said first screen (EA) is transmitted to said device (EC), so that it is displayed substantially simultaneously on a selected portion of said second screen (EA2), and **in that** in said step monitoring data displayed on said first screen (EA1) is transmitted consecutively to a detection of the use of said device (EC) so that said data is displayed substantially simultaneously on a selected portion of said second screen (EA2).

2. The method according to Claim 1, **characterized in that** in said step all said monitoring data displayed on said first screen (EA1) is transmitted consecutively to a detection of the use of said device (EC), so that said data is all displayed substantially simultaneously on a selected portion of said second screen (EA2).

3. The method according to Claim 1, **characterized in that** in said step, monitoring data displayed on said first screen (EA1) and representative of a warning, is transmitted consecutively to a detection of the use of said device (EC), so that only this warning monitoring data is displayed substantially simultaneously on a selected portion of said second screen (EA2).

4. The method according to one of Claims 1 to 3, **characterized in that** in said step a location is detected in which said driver is situated, then monitoring data is transmitted to said device (EC) only on condition that said detected location is a seat dedicated to the driving of said vehicle (V), and any attempt of suppression by said driver of the display of said transmitted monitoring data is rendered impossible.

5. The method according to one of Claims 1 to 3, **characterized in that** in said step a location is detected in which said device (EC) is placed, then monitoring data is transmitted to said device (EC) only on condition that said detected location is a space dedicated to the driving of said vehicle (V), and any attempt of suppression by said driver of the display of said transmitted monitoring data is rendered impossible.

6. The method according to one of Claims 1 to 5, **characterized in that** said device (EC) is recorded at an on-board application of said vehicle (V), so that it is considered as belonging to said driver.

7. The method according to one of Claims 1 to 6, **characterized in that** in said step the use of said device (EC) is detected by exchange of messages between the latter (EC) and said vehicle (V).

8. The method according to one of Claims 1 to 7, **characterized in that**, when said mode concerns a temporary situation which has just terminated, a warning message is transmitted to said device (EC) signalling the end of this temporary situation and requiring an immediate resumption of the driving of said vehicle (V) by said driver.

9. A vehicle (V) suitable for operating in an automated driving mode and having a first screen (EA1) suitable for displaying monitoring data in order to inform a driver who has a portable communication device (EC) suitable for exchanging data with said vehicle (V) via radio waves and comprising a second display screen (EA2), **characterized in that** it includes processing means (MT1) arranged for controlling the establishing of a communication between said vehicle (V) and said device (EC) when the latter (EC) is used and when said vehicle (V) is in said mode, then for triggering a transmission to said device (EC) of a portion at least of monitoring data displayed on said first screen (EA1), so that it is displayed substantially simultaneously on a selected portion of said second screen (EA2), monitoring data displayed on said first screen (EA1) being transmitted consecutively to a detection of the use of said device (EC) so that said data is displayed substantially simultaneously on a selected portion of said second screen (EA2).
